(19) Europäisches Patentamt
European Patent Office
Office européen des brevets

(11) **EP 4 770 254 A1**

(12) **EUROPEAN PATENT APPLICATION**
published in accordance with Art. 153(4) EPC

(43) Date of publication:
**01.07.2026 Bulletin 2026/27**

(21) Application number: **23949404.0**

(22) Date of filing: **23.08.2023**

(51) International Patent Classification (IPC):
**H04W 74/08** (2024.01)

(52) Cooperative Patent Classification (CPC):
**H04W 74/08**

(86) International application number:
**PCT/CN2023/114416**

(87) International publication number:
**WO 2025/039214 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **CAO, Jianfei
Dongguan, Guangdong 523860 (CN)**
• **LIU, Zhe
Dongguan, Guangdong 523860 (CN)**

(74) Representative: **Novagraaf Technologies
2 rue Sarah Bernhardt
CS90017
92665 Asnières-sur-Seine Cedex (FR)**

(54) **WIRELESS COMMUNICATION METHOD AND APPARATUS, DEVICE, AND STORAGE MEDIUM**

(57)    A wireless communication method and apparatus, a device, and a storage medium, which relate to the technical field of mobile communications. The method is executed by a terminal device, and comprises: on the basis of a first transmission configuration indicator (TCI) state already indicated to the terminal device, sending a random access message on a physical random access channel (PRACH) (901); receiving timing advance information sent by a network device, the information being sent on the basis of the random access message (902); and sending an uplink channel and/or an uplink signal on the basis of the timing advance information (903). The solution can improve the communication efficiency of a wireless system.

```
┌─────────────────┐                              ┌─────────────────┐
│ Terminal device │                              │ Network device  │
└─────────────────┘                              └─────────────────┘
        │                                                  │
        │  S901, the terminal device transmits a random    │
        │  access message on a PRACH based on a first TCI  │
        │  state already indicated to the terminal device  │
        │ ────────────────────────────────────────────────►│
        │                                                  │
        │  S902, the network device transmits TA information to │
        │  the terminal device based on the random access message │
        │ ◄────────────────────────────────────────────────│
        │                                                  │
        │  S903, the terminal device transmits an uplink channel │
        │  and/or an uplink signal based on the TA information │
        │ ────────────────────────────────────────────────►│
```

FIG. 9

## Description

## TECHNICAL FIELD

Embodiments of the present disclosure relate to the field of mobile communication technologies, and in particular, relate to a method and apparatus for wireless communication, and a device and a storage medium thereof.

## RELATED ART

Timing advance (TA) is used for uplink transmission by a terminal device, and refers to a time advance amount of a system frame in which the terminal device transmits uplink data.

In related arts, a network device may configure one or more timing advance group identifiers (TAG IDs) for terminal devices, and the TA value corresponding to each of the TAG IDs is indicated and updated by the network device.

## SUMMARY

Embodiments of the present disclosure provide a method and apparatus for wireless communication, and a device and a storage medium thereof. The technical solutions are as follows:

In some embodiments of the present disclosure, a method for wireless communication is provided. The method is performed by a terminal device, and includes: transmitting a random access message on a physical random access channel (PRACH) based on a first transmission configuration indicator (TCI) state already indicated to the terminal device; receiving timing advance information that is transmitted by a network device based on the random access message; and transmitting an uplink channel and/or an uplink signal based on the timing advance information.

In some embodiments of the present disclosure, a method for wireless communication is provided. The method is performed by a network device, and includes: receiving a random access message that is transmitted by a terminal device on a PRACH based on a first TCI state already indicated to the terminal device; transmitting timing advance information based on the random access message; and receiving an uplink channel and/or an uplink signal that is transmitted by the terminal device based on the timing advance information.

In some embodiments of the present disclosure, an apparatus for wireless communication is provided. The apparatus includes: a transmitting module, configured to transmit a random access message on a PRACH based on a first TCI state already indicated to the terminal device; a receiving module, configured to receive timing advance information that is transmitted by a network device based on the random access message; and the transmitting module, configured to transmit an uplink channel and/or an uplink signal based on the timing advance information.

In some embodiments of the present disclosure, an apparatus for wireless communication is provided. The apparatus includes: a receiving module, configured to receive a random access message that is transmitted by a terminal device on a PRACH based on a first TCI state already indicated to the terminal device; a transmitting module, configured to transmit timing advance information based on the random access message; and the receiving module, configured to receive an uplink channel and/or an uplink signal that is transmitted by the terminal device based on the timing advance information.

In some embodiments of the present disclosure, a terminal device is provided. The terminal device includes a processor, a memory and a transceiver; wherein the memory is configured to store one or more computer programs, and the processor is configured to load and run the one or more computer programs to cause the terminal device to perform the method for wireless communication.

In some embodiments of the present disclosure, a network device is provided. The network device includes a processor, a memory and a transceiver; wherein the memory is configured to store one or more computer programs, and the processor is configured to load and run the one or more computer programs to cause the network device to perform the method for wireless communication.

In some embodiments of the present disclosure, a computer-readable storage medium is provided. The computer-readable storage medium stores one or more computer programs, wherein the one or more computer programs, when loaded and run by a processor, cause the processor to perform the method for wireless communication.

In some embodiments of the present disclosure, a chip is provided. The chip is configured to run in a communication device, to cause the communication device to perform the method for wireless communication.

In some embodiments of the present disclosure, a computer program product is provided. The computer program product includes one or more computer instructions stored in a computer-readable storage medium, wherein the one or more computer instructions, when read from the computer-readable storage medium and executed by a processor of a communication device, cause the communication device to perform the method for wireless communication.

In some embodiments of the present disclosure, a computer program is provided. The computer program, when loaded and run by a processor of a communication device, causes the communication device to perform the method for wireless communication.

In some embodiments of the present disclosure, a solution for resource configuration is provided.

In a case where a terminal device needs to acquire or update a TA value, the terminal device transmits a random access message based on a TCI state already indicated to the terminal device. This allows a network device to transmit timing advance information to the terminal device based on the random access message. Subsequently, the terminal device may transmit an uplink channel and/or uplink signal in advance based on the timing advance information transmitted by the network device. In the process, the transmission configuration of the random access message used for TA estimation reuses the TCI state already indicated to the terminal device, such that the TCI state already indicated to the terminal device is associated with the process of the terminal device acquiring the TA value. This saves signaling resources for the network device to configure the process of the terminal device acquiring the TA value, and improves the communication efficiency of wireless system.

## BRIEF DESCRIPTION OF DRAWINGS

FIG. 1 is a schematic diagram of an architecture of a communication system according to some embodiments of the present disclosure;

FIG. 2 is a schematic diagram of a radio resource control (RRC) configuration for a TAG according to some embodiments of the present disclosure;

FIG. 3 is a diagram of a differential adjustment format of a TA in a medium access control (MAC) control element (CE) according to some embodiments of the present disclosure;

FIG. 4 is a diagram of a differential adjustment format of a TA according to some embodiments of the present disclosure;

FIG. 5 is a schematic diagram of signaling according to some embodiments of the present disclosure;

FIG. 6 is a relationship diagram of uplink and downlink frame structures according to some embodiments of the present disclosure;

FIG. 7 is a schematic diagram of an uplink scheduling scenario for single downlink control information (S-DCI) multi-transmission reception point (MTRP) according to some embodiments of the present disclosure;

FIG. 8 is a schematic diagram of parameter configuration of an RRC according to some embodiments of the present disclosure;

FIG. 9 is a flowchart of a method for wireless communication according to some embodiments of the present disclosure;

FIG. 10 is a flowchart of a method for wireless communication according to some embodiments of the present disclosure;

FIG. 11 is a step diagram of a TA acquisition process according to some embodiments of the present disclosure;

closure;

FIG. 12 is a flowchart of a UE-triggered contention-based random access channel (RACH) procedure for TA acquisition according to some embodiments of the present disclosure;

FIG. 13 is a block diagram of an apparatus for wireless communication according to some embodiments of the present disclosure;

FIG. 14 is a block diagram of an apparatus for wireless communication according to some embodiments of the present disclosure; and

FIG. 15 is a schematic structural diagram of a communication device according to some embodiments of the present disclosure.

## DETAILED DESCRIPTION

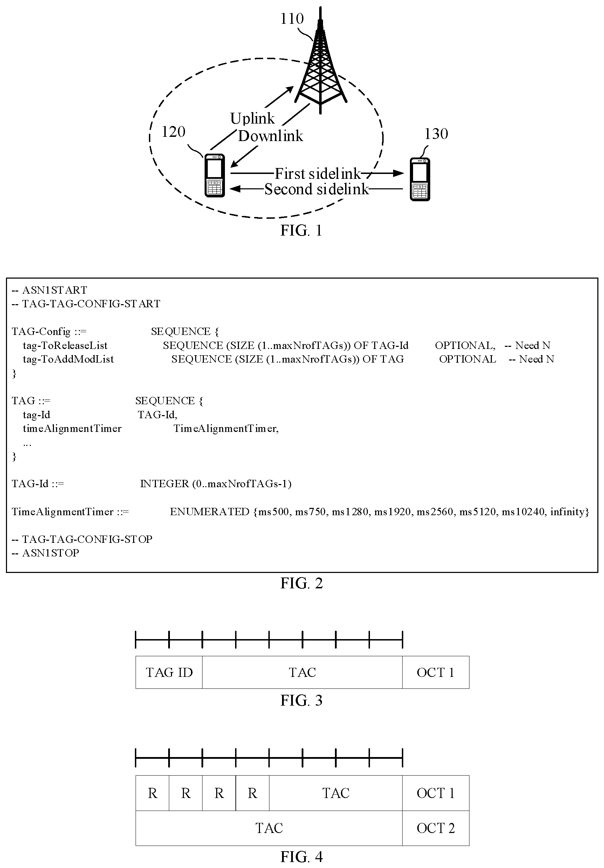

FIG. 1 is a schematic diagram of a communication system involved in some embodiments of the present disclosure. The communication system includes a network device 110 and a terminal device 120, and/or the terminal device 120 and a terminal device 130, which is not limited in the present disclosure.

The network device 110 in the present disclosure provides wireless communication functions. The network device 110 includes but not limited to: an evolved Node-B (eNB), a radio network controller (RNC), a Node-B (NB), a base station controller (BSC), a base transceiver station (BTS), a home base station (e.g., a home evolved Node-B, or a home Node-B, HNB), a baseband unit (BBU), an access point (AP) in a wireless fidelity (Wi-Fi) system, a wireless relay node, a wireless backhaul node, a transmission point (TP) or a transmission reception point (TRP), or the like. The network device 110 may also be a next generation Node-B (gNB) or a transmission point (a TRP or a TP) in a 5$^{th}$ generation (5G) mobile communication system, or one or a set of antenna panels (including a plurality of antenna panels) of a base station in the 5G system, or a network node constituting a gNB or a transmission point, such as a baseband unit (BBU) or a distributed unit (DU), or the like, or a base station in a beyond 5$^{th}$ generation (B5G), a 6$^{th}$ generation (6G) mobile communication system, or the like, or a core network (CN), a fronthaul, a backhaul, a radio access network (RAN), a network slice, or the like, or a serving cell, a primary cell (PCell), a primary secondary cell (PSCell), a special cell (SpCell), a secondary cell (SCell), a neighboring cell, or the like, of the terminal device.

The terminal device 120 and/or terminal device 130 in the present disclosure is also known as a user equipment (UE), an access terminal, a user unit, a user station, a mobile station, a mobile terminal, a remote station, a remote terminal, a mobile device, a user terminal, a terminal, a wireless communication device, a user agent, a user device. The terminal includes but is not limited to: a handheld device, a wearable device, an in-vehicle device, an Internet of things device, or the like, including a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set top box (STB), a customer premise equipment (CPE), or the like.

The network device 110 and the terminal device 120 communicate with each other using an air interface technology, such as a Uu interface.

As an example, the network device 110 and the terminal device 120 are involved in two communication scenarios: an uplink communication scenario and a downlink communication scenario. The uplink communication refers to transmitting signals to the network device 110, and the downlink communication refers to transmitting signals to the terminal device 120.

The terminal device 120 and the terminal device 130 communicate with each other using an air interface technology, such as a Prose communication 5 (PC5) interface.

In some embodiments, the terminal device 120 and the terminal device 130 are involved in two communication scenarios: a first sidelink communication scenario and a second sidelink communication scenario. The first sidelink communication refers to transmitting signals to the terminal device 130, and the second sidelink communication refers to transmitting signals to the terminal device 120.

Both the terminal device 120 and the terminal device 130 are within a network coverage and located in the same cell, or both the terminal device 120 and the terminal device 130 are within the network coverage but located in different cells, or the terminal device 120 is within the network coverage but the terminal device 130 is outside the network coverage.

The technical solutions according to the embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long-term evolution (LTE) system, an LTE frequency division duplex (FDD) system, an LTE time division duplex (TDD) system, an advanced long-term evolution (LTE-A) system, a universal mobile telecommunication system (UMTS), a worldwide interoperability for microwave access (Wi-MAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a wireless fidelity (Wi-Fi) system, a cellular Internet of things system, a cellular passive Internet of things system, and may also be applied to the subsequent evolution systems of 5G NR system, and may also be applied to B5G, 6G, and subsequent evolution systems. In some embodiments of the present disclosure, "NR" may also be referred to as 5G NR system or 5G system. Among them, the 5G mobile communication system may include non-standalone (NSA) and/or standalone (SA).

The technical solutions according to the embodiments of the present disclosure may also be applied to a machine-type communications (MTC), a long-term evolution-machine (LTE-M), a device-to-device (D2D) network, a machine to machine (M2M) network, an Internet of things (IoT) network, or other networks. The IoT network may include an Internet of vehicles. The communication methods in the Internet of vehicles system are collectively referred to as vehicle to X (V2X, X may represent anything). For example, the V2X may include vehicle-to-vehicle (V2V) communications, vehicle-to-infrastructure (V2I) communications, vehicle-to-pedestrian (V2P) communications, vehicle-to-network (V2N) communications, or the like.

## 1. TA

A UE may be configured with up to four TAGs in one cell group (CG). A schematic diagram of an RRC configuration for a TAG may be illustrated as FIG. 2. Generally, one CG may correspond to a plurality of serving cells, and each of the plurality of serving cells may be assigned a TAG ID. Each TAG has a time alignment timer (TimeAlignmentTimer), and the UE performs timing of the timer. In a case where the timer expires, the UE considers the uplink on the TAG to be out of synchronization. In a case where a network adjusts TA values via a MAC CE or other signaling while the timer is running, the timer may be reset, and the UE considers the uplink on the TAG to be in synchronization. For example, in a case where a value of the TimeAlignmentTimer is configured to 500 ms, that is, the network needs to update (or adjust) a TA value of the UE once within 500 ms. Otherwise, the UE may consider the uplink to be out of synchronization and may initiate a random access procedure in a case where uplink data arrives.

The formula for calculating the TA for the UE is relatively simple, as presented hereinafter.

$$(N_{TA} + N_{TA,offset}) * T_C$$

The TA for the UE is based on a first path of a downlink channel received by the UE, that is, a first symbol of a slot containing the downlink channel, which serves as a downlink reference. The UE performs advance transmission based on the reference.

In one CG, each serving cell may be pre-configured with a timing advance offset (TA offset) n-TimingAdvanceOffset, that is, *N TA offset* in the formula. A TA adjustment amount ($N_{TA}$) is determined based on a preconfigured offset. $T_C$ represents a minimum time unit in an NR system, $T_C$ = 1/(4096*480kHz). $N_{TA}$ may be provided by a MAC CE of the network in a differential adjustment manner. That is, a current TA adjustment (new) is adjusted forward or backward in time based on a previous (old) TA. A calculation formula is as follows:

$$N_{(TA_{new})} = N_{(TA_{old})} + (T_A - 31)*16*64*/2^\mu$$

The differential adjustment of the TA in the MAC CE is illustrated in FIG. 3. That is, the TA is adjusted by $T_A$ minimum time units based on the previous TA, and the granularity of the TA adjustment is TAG. The meanings of the fields involved in FIG. 3 are as follows.

- TAG ID: This field indicates the TAG identity of an addressed TAG. A TAG containing the SpCell has a TAG ID 0. This field has a length of 2 bits.
- TA command: This field indicates an index value TA (0, 1, 2, ..., 63) used to control the amount of timing adjustment that MAC entity has to apply (as specified in TS 38.213). This field has a length of 6 bits.

One method to acquire the TA is that a network indicates an absolute value of the TA for an uplink transmission of the UE. For example, a MAC CE of the network directly provides an absolute value $N_{TA}$, which ranges from 0 to 3846, indicates that a range for TA is $N_{TA} = T_A$ *16*64*$2^\mu$, and has a length of 12 bits.

The TA command is applicable to a primary timing advance group (PTAG) corresponding to the MAC entity, that is, the definition of the PTAG is to include a SpCell. Since the MAC CE is only applicable to the PTAG, it does not need to include a TAG ID. The differential adjustment format of the TA is illustrated in FIG. 4. The meanings of the fields involved in FIG. 4 are as follows.

- TA Command: This field indicates an index value TA used to control the amount of timing adjustment that the MAC entity has to apply in TS 38.213 [6]. This field has a length of 12 bits.
- R: Reserved bit, set to "0."

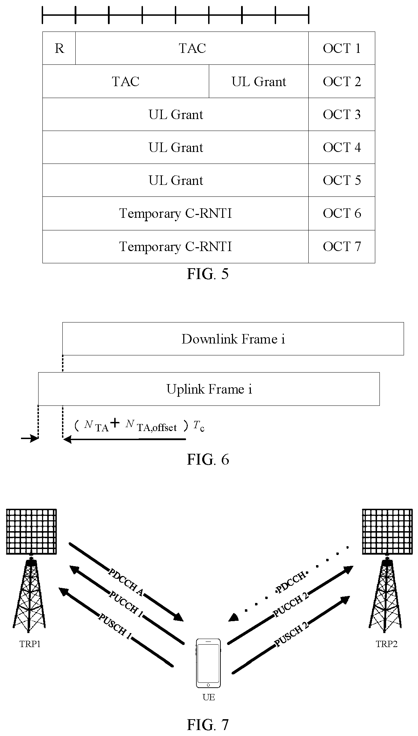

Additionally, during an initial access (cell) procedure, upon the UE transmits a PRACH to a network, the UE expects the network to provide a TA indication via a medium access control random access response (MAC RAR) in a time window. The specific signaling diagram is illustrated in FIG. 5, allowing the UE to acquire a most initial absolute value of the TA, which also has a length of 12 bits.

In a case where a UE operates in a single transmission and reception point (STRP) mode, then the reference point of the TA for the UE is calculated based on a downlink reception time, advancing forward by a time ($N_{TA}$ + $N_{TA,offSet}$) * $T_C$ to transmit an uplink channel or signal. A relationship between uplink and downlink frame structures may be illustrated in FIG. 6.

## 2. Uplink Multi-TRP (MTRP) Transmission Solution

In 3rd Generation Partnership Project (3GPP) Release 17 (Rel-17), repetition for a physical uplink control channel (PUCCH)/physical uplink shared channel (PUSCH) based on MTRP is supported. This is to enhance coverage of uplink and reliability of transmission. The UE needs to transmit the PUCCH/PUSCH containing the same content to different TRPs. For PUSCH repetition, the Rel-17 standard supports multi-PUSCH repetition based on S-DCI, wherein one TA is used for sequential PUSCH transmission to different TRPs. For multi-PUSCH transmission based on multi-DCI (M-DCI), since no sufficiently ideal backhaul connection may be present between a plurality of TRPs, and the plurality of TRPs independently schedule the UE. This operation may cause overlapping of PUSCH/-PUCCH for different TRPs in time. Therefore, it is necessary to support different TA updates or indications for different TRPs.

In Release 18 (Rel-18), 3GPP is formulating a mechanism for a UE to simultaneously transmit PUCCH/-PUSCH from a plurality of antenna panels to a plurality of TRPs. However, even under the configuration of a plurality of uplink transmission antenna panels and multi-TRP reception, the UE is restricted to using only a single TA for advance transmission within a serving cell. Such a restriction should clearly be overcome; that is, the acquisition and indication of TRP-specific TA should be supported.

For example, in an intra-cell S-DCI scheduled MTRP operation scenario, TRP#1 and TRP#2 use the same physical cell identifier (PCI), and a schematic diagram of an uplink scheduling scenario for S-DCI MTRP is illustrated in FIG. 7. In an inter-cell S-DCI MTRP scenario, TRP#1 and TRP#2 use different PCIs, and each of the TRPs may schedule uplink and downlink transmission for its own or other TRPs via the DCI. It should be additionally noted that, according to the current progress of 3GPP, one serving cell of a UE is configured with two TAGs, wherein each TAG corresponds to one TRP.

## 3. Unified TCI State

In the 3GPP standardization progress, the concept of TCI state is introduced in Release 15 (Rel-15) for downlink spatial domain quasi-colocation (QCL) (beam) indication, and for transmission of QLC information in the time and frequency domains. Specifically, a QCL relationship may be simply described as large-scale fading from a source reference signal to a target reference signal. For beam indication, in a case where a UE acquires the QCL relationship between two source reference signals and a target reference signal from the network, the UE may use the receive beam previously used for receiving the source reference signals to receive the target reference signal.

The indication mechanism of TCI state in Rel-15/16 is only applicable to downlink channels and signals. In NR systems, the concept of spatial relation is introduced for uplink beam indication, which is also used to express a spatial relationship between two reference signals.

To provide a unified uplink and downlink beam management mechanism for NR systems, 3GPP Rel-17 proposes the concept of a unified TCI state based on the design of TCI state in Rel-15/16. In a case where the unified TCI state is used for uplink, the unified TCI state may be implemented as an uplink (UL) TCI state or a joint TCI state. The unified TCI state incorporates important new functionalities, for example, as follows:

(1) Three modes are designed for the unified TCI state. That is, the joint TCI state is applicable to both uplink and downlink channels and signals, a downlink (DL) TCI state is only applicable to downlink channels and signals, and the UL TCI state is only applicable to uplink channels and signals.
(2) Downlink channels (partial physical downlink control channel (PDCCH) and physical downlink shared channel (PDSCH)) and signals (for example, non-periodic channel state information reference signals (CSI-RSs)) use the same downlink transmission indication beam, which is configured via a DL TCI state or a joint TCI state.
(3) Uplink channels (PUCCH, PUSCH) and signals (for example, sounding reference signals (SRSs)) use the same uplink transmission indication beam, which is configured via a UL TCI state or a joint TCI state.
(4) The unified TCI state may be dynamically updated and indicated using a MAC CE or DCI.
(5) The unified TCI state is applicable to a carrier aggregation scenario, where the beam indication on single component carrier (CC) may be applied to a plurality of different CCs.
(6) An uplink beam indication and an uplink power control parameter may be provided simultaneously via a UL TCI state or a joint TCI state.
(7) The unified TCI state supports inter-cell beam management functionalities.

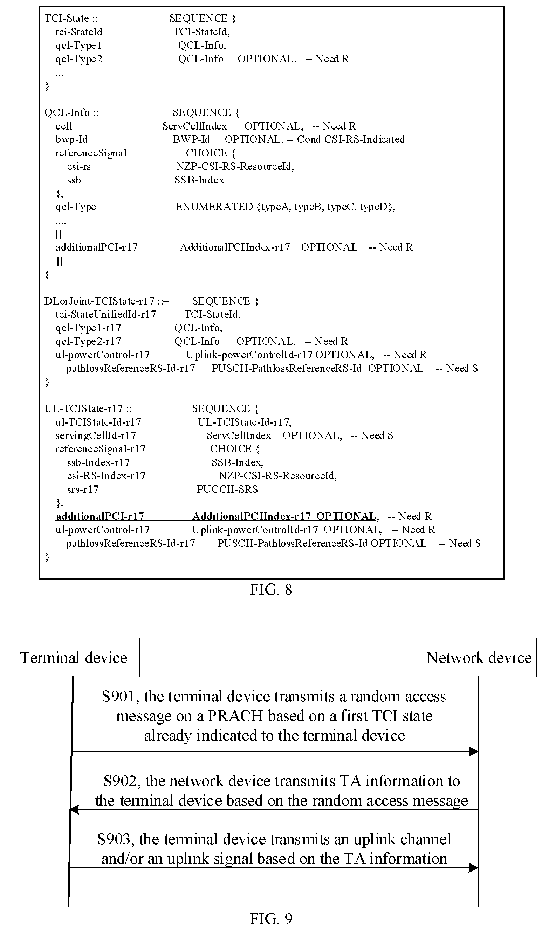

For better understanding of the significance of the unified TCI state, reference may be made to a schematic diagram of the RRC parameter configuration, as illustrated in FIG. 8. The unified TCI state does not support the MTRP in Rel-17, but supports multiple uplink transmission solutions for MTRP in Rel-18. Furthermore, in Rel-18, the TRP-specific TA for M-DCI MTRP is enhanced, but the TRP-specific TA for S-DCI MTRP is not enhanced.

4. The Relationship between UL/joint TCI State and S-DCI MTRP Transmission

PUCCH: On a unified TCI framework extension for S-DCI based MTRP, use RRC configuration to inform that the UE shall apply the first one, the second one, or both of the indicated joint/UL TCI states to a PUCCH resource/group.

On the unified TCI framework extension for S-DCI based MTRP, when two indicated joint/UL TCI states are applied to a PUCCH resource/resource group:

For time-division multiplexing (TDM) based PUCCH transmission (Tx) scheme, the UE shall apply two indicated joint/UL TCI states to repetitions of the PUCCH transmission corresponding to the PUCCH resource/resource group based on the Rel-17 rules for mapping spatial settings to the repetitions by replacing the first and second spatial settings with the first and second indicated joint/UL TCI states, respectively.

For single frequency network (SFN) based PUCCH Tx scheme, the UE shall apply two indicated joint/UL TCI states to the PUCCH transmission corresponding to the PUCCH resource/resource group.

PUSCH: On unified TCI framework extension for S-DCI based MTRP, when two SRS resource sets for codebook-based (CB)/non-codebook-based (NCB) are configured, support the followings for PUSCH transmission scheduled/activated by a DCI format 0_1/0_2 (including dynamic grant (DG) and Type2 configured grant (CG):

If the DCI format 0_1/0_2 indicates codepoint "00" for the existing SRS resource set indicator, the UE shall apply the first indicated joint/UL TCI state to all PUSCH antenna port(s) of corresponding PUSCH transmission occasion(s).

If the DCI format 0_1/0_2 indicates codepoint "01" for the existing SRS resource set indicator, the UE shall apply the second indicated joint/UL TCI state to all PUSCH antenna port(s) of corresponding PUSCH transmission occasion(s).

If the DCI format 0_1/0_2 indicates codepoint "10" or "11" for the existing SRS resource set indicator:

For TDM based PUSCH Tx scheme, the UE shall apply the first indicated joint/UL TCI state to the PUSCH transmission occasion(s) associated with the first SRS resource set for CB/NCB, and the second indicated joint/UL TCI state to the PUSCH transmission occasion(s) associated with the second SRS resource set for CB/NCB (note: the association between an SRS resource set for CB/NCB and PUSCH transmission occasion(s) is defined according to TS 38.214).

On unified TCI framework extension for S-DCI based MTRP, an RRC configuration is provided to a Type1 CG configuration to inform that the UE shall apply the first, the second, or both indicated joint/UL TCI states to the corresponding CG-PUSCH transmission:

If the first or the second indicated joint/UL TCI state is applied, the UE shall apply the first or the second indicated joint/UL TCI state to all PUSCH antenna port(s) of corresponding PUSCH transmission occasion(s);

If both indicated joint/UL TCI states are applied:

For TDM based PUSCH Tx scheme, the UE shall apply the first indicated joint/UL TCI state to the PUSCH transmission occasion(s) associated with the first SRS resource set for CB/NCB, and the second indicated joint/UL TCI state to the PUSCH transmission occasion(s) associated with the second SRS resource set for CB/NCB.

SRS: On unified TCI framework extension for both S-DCI and M-DCI based MTRP operations, if a periodic (P)/semi-persistent (SP)/aperiodic (AP) SRS resource set for CB/NCB/antenna switching (AS) or an AP SRS resource set for beam management (BM) is configured to follow unified TCI state, an RRC configuration can be provided to the SRS resource set to inform that the UE shall apply the first or the second indicated joint/UL TCI state to the SRS resource set.

For M-DCI based MTRP operation, the first and the second indicated joint/UL TCI states correspond to the indicated joint/UL TCI states specific to coresetPoolIndex value 0 and value 1, respectively.

When two SRS resource sets for CB/NCB are configured, the UE does not expect the following:

to be configured with the first indicated UL/joint TCI state which is to be applied to the second SRS resource set; or

to be configured with the second indicated UL/joint TCI state which is to be applied to the first SRS resource set.

For M-DCI based MTRP operation, if the RRC configuration is not provided to the SRS resource set and the SRS resource set is an AP SRS resource set triggered by PDCCH on a CORESET associated with a coresetPoolIndex value, the UE shall apply the indicated joint/UL TCI state specific to the coresetPoolIndex value to the SRS resource set.

Embodiments hereinafter of the present disclosure propose a TA information acquisition solution and a TA information association solution for uplink transmission. This may extend the application scenarios of TA. For example, the TA may be applied in an S-DCI MTRP operation scenario.

FIG. 9 is a flowchart of a method for wireless communication according to some embodiments of the present disclosure. The method may be performed interactively by a terminal device and a network device. The terminal device may be terminal device 120 or the terminal device 130 in the network architecture illustrated in FIG. 1, and the network device may be network device 110 in the network architecture illustrated in FIG. 1. The method may include the following steps.

In S901, the terminal device transmits a random access message on a PRACH based on a first TCI state already indicated to the terminal device. Correspondingly, the network device receives the random access message that is transmitted by the terminal device on the PRACH based on the first TCI state already indicated to the terminal device.

In the embodiments of the present disclosure, the network device may pre-indicate one or more TCI states to the terminal device. In a case where the terminal device needs to update TA information, the terminal device may reuse the first TCI state from the pre-indicated one or more TCI states to transmit the random access message on the PRACH.

The first TCI state already indicated to the terminal device may be one or more of UL/joint TCI states already indicated to the terminal device.

In S902, the network device transmits TA information to the terminal device based on the random access message. Correspondingly, the terminal device receives the TA information that is transmitted by the network device based on the random access message.

The TA information may include TA values for one or more TAGs.

In the embodiments of the present disclosure, the network device may estimate the TA values of the terminal device based on the random access message transmitted by the terminal device, and indicate estimated TA values to the terminal device.

The TA values indicated by the network device to the terminal device may be the TA values of the TAG ID configured for the terminal. For example, the network device may transmit one or more sets of TAG IDs and TA commands (TACs) corresponding to the TAG IDs to the terminal device, where each TAC may include the TAG ID, and the TA value corresponding to the TAG ID.

In S903, the terminal device transmits an uplink channel and/or an uplink signal based on the TA information. Correspondingly, the network device receives the uplink channel and/or the uplink signal that is transmitted by the terminal device based on the TA information.

In the embodiments of the present disclosure, in a case where the terminal device transmits the uplink channel and/or the uplink signal (i.e., transmits on an uplink channel and/or an uplink signal), the terminal device may transmit the uplink channel and/or the uplink signal in advance based on the TA value indicated by the TA information that is transmitted by the network device.

In some embodiments, the network device may configure a plurality of TAG IDs for a terminal, wherein the plurality of TAG IDs correspond to TA values respectively. In a case where the terminal device transmits the uplink channel and/or the uplink signal, the terminal device may select one TA value from the TA values corresponding to the plurality of TAG IDs for advance transmission.

In some embodiments, for different uplink channels and/or different uplink signals, the terminal device may select different TA values from the TA values corresponding to the plurality of TAG IDs, and transmit the different uplink channels and/or different uplink signals in advance based on the TA values. Alternatively, the terminal device may also select a single TA value from the TA values corresponding to the plurality of TAG IDs, and transmit the different uplink channels and/or different uplink signals in advance based on the TA value.

In summary, in the technical solution according to some embodiments of the present disclosure, in a case where the terminal device needs to acquire or update the TA value, the terminal device transmits the random access message via the TCI state that is already indicated to the terminal device. This allows the network device to transmit the TA information to the terminal device based on the random access message. Subsequently, the terminal device may transmit the uplink channel and/or uplink signal in advance based on the TA information received from the network device. In the process, the transmission configuration of the random access message used for TA estimation reuses the TCI state already indicated to the terminal device, such that the TCI state already indicated to the terminal device is associated with the process of the terminal device acquiring the TA value. This saves signaling resources for the network device to configure the process of the terminal device acquiring the TA value, and improves the communication efficiency of the wireless system.

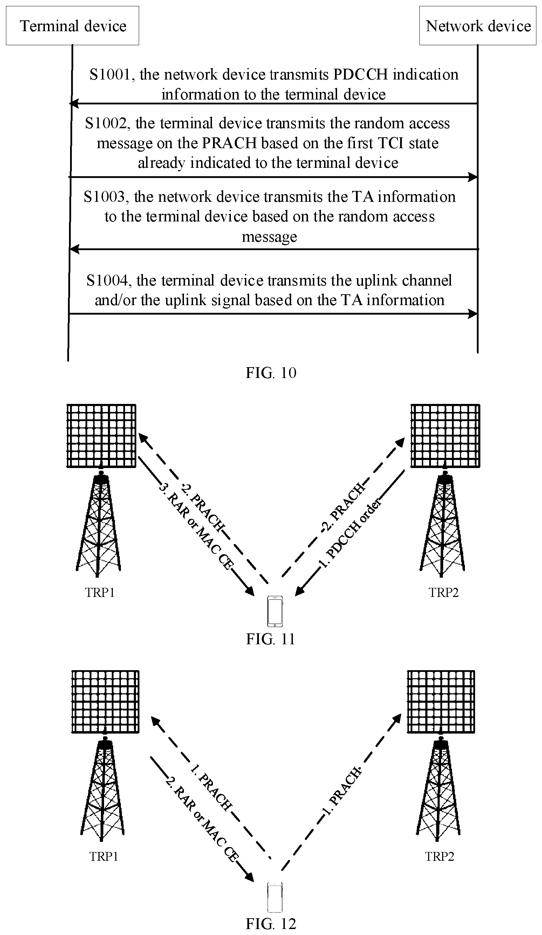

Based on the technical solution illustrated in FIG.9, FIG. 10 is a flowchart of a method for wireless communication according to some embodiments of the present disclosure. The method may be performed interactively by the terminal device and the network device. The terminal device may be terminal device 120 or terminal device 130 in the network architecture illustrated in FIG. 1, and the network device may be network device 110 in the network architecture illustrated in FIG. 1. As illustrated in FIG. 10, the method may include the following steps:

In S1001, the network device transmits PDCCH indication information to the terminal device. Correspondingly, the terminal device receives the PDCCH indication information from the network device. The PDCCH indication information is used to indicate the first TCI state based on which the terminal device transmits the random access message.

The first TCI state is one or more of TCI states already indicated to the terminal device.

That is, prior to transmitting the PDCCH indication information to the terminal device, the network device may first indicate one or more TCI states for the terminal device.

The first TCI state is a UL/joint TCI state. That is, prior to transmitting the PDCCH indication information to the terminal device, the network device may first indicate one or more UL/joint TCI states for the terminal device. In S1001, the network device indicates that the terminal device transmits the random access message for TA value estimation using the first TCI state from the already indicated one or more UL/joint TCI states via the PDCCH.

In some embodiments, the first TCI state is one or more UL/joint TCI states already indicated to the terminal device, wherein the UL/joint TCI states correspond to a plurality of TRPS.

The terminal device supports MTRP scenarios. For example, the terminal device may simultaneously establish wireless connections to two or more TRPs and perform wireless communication with the two TRPs simultaneously/collaboratively. Alternatively, the terminal device may simultaneously perform wireless communication with more TRPs. For example, the terminal device supports simultaneous/collaborative wireless communication with four, six, or eight TRPs. In this case, for each TRP in the plurality of TRPs, the network device may configure the UL/joint TCI state corresponding to that TRP for the terminal device. In S1001, the network device may indicate the terminal device to use one or more of the UL/joint TCI states corresponding to the plurality of TRPs as the first TCI state via the PDCCH. Based on the technical solution, in the MTRP scenario, for example, in an S-DCI MTRP scenario, the network device may indicate the terminal device to reuse one or more of the indicated UL/joint TCI states for the plurality of TRPs to transmit subsequent random access messages for TA estimation. This may save signaling resources for the network device to configure the process of the terminal device acquiring the TA value in the MTRP scenario (e.g., an S-DCI MTRP scenario), and improve the communication efficiency of the wireless system.

In some embodiments, the PDCCH indication information includes one or more of:

1. Indication information for the first TCI state.

The indication information for the first TCI state may include codepoint information, where different codepoints are used to indicate different TCI states or combinations of TCI states in the plurality of TCI states.

For example, in an MTRP scenario (e.g., an S-DCI MTRP scenario), the terminal device establishes connections to two TRPs (i.e., a first TRP and a second TRP), wherein the first TRP corresponds to a first indicated UL/joint TCI state, and the second TRP corresponds to a second indicated UL/joint TCI state.

In a case where the PRACH transmission are simultaneous in the time domain, taking the PDCCH indication information indicating the first TCI state via a 2-bit indication field as an example, the technical solutions illustrated in some embodiments of the present disclosure may design the following codepoint solution 1:

(1) Codepoint "00" represents that the PRACH transmitted by the UE follows the first indicated UL/joint TCI state (e.g., the spatial filter of the first indicated UL/joint TCI state). Alternatively, in a case where the terminal device transmits the random access message, the terminal device transmits the random access message to only one TRP (e.g., the first TRP corresponding to the first indicated UL/joint TCI state).

(2) Codepoint "01" represents that the PRACH transmitted by the UE follows the second indicated UL/-joint TCI state (e.g., the spatial filter of the second indicated UL/joint TCI state). Alternatively, in a case where the terminal device transmits the random access message, the terminal device transmits the random access message to only one TRP (e.g., the second TRP corresponding to the second indicated UL/joint TCI state).

(3) Codepoint "10" represents that the PRACH transmitted by the UE follows the first and the second indicated UL/joint TCI state. Alternatively, in a case where the terminal device transmits the random access message, the terminal device transmits the random access message to a plurality of TRPs. For example, The UE transmits the PRACH based on the first indicated UL/joint TCI state for the first TRP, and transmits the PRACH based on the second indicated UL/joint TCI state for the second TRP.

In the solution 1, the codepoint "11" may be reserved.

Additionally, in a case where the PRACH transmission are separated in the time domain (i.e., using a TDM scheme or solution). And similarly, taking the PDCCH indication information indicating the first TCI state via a 2-bit indication field as an example, the technical solutions illustrated in some embodiments of the present disclosure may design the following codepoint solution 2:

(1) Codepoint "00" represents that the PRACH transmitted by the UE follows the first indicated UL/joint TCI state. Alternatively, in a case where the terminal device transmits the random access message, the terminal device transmits the random access message to only one TRP (e.g., the first TRP corresponding to the first indicated UL/joint TCI state).

(2) Codepoint "01" represents that the PRACH transmitted by the UE follows the second indicated UL/-joint TCI state. Alternatively, in a case where the terminal device transmits the random access message, the terminal device transmits the random access message to only one TRP (e.g., the second TRP corresponding to the second indicated UL/joint TCI state).

(3) Codepoint "10" represents that the PRACH transmitted by the UE follows the first and the second indicated UL/joint TCI state. Alternatively, in a case where the terminal device transmits the random access message, the terminal device transmits the random access message to a plurality of TRPs. For example, The UE transmits the PRACH based on the first indicated UL/joint TCI state for the first TRP, and transmits the PRACH based on the second indicated UL/joint TCI state for the second TRP.

(4) Codepoint "11" represents that the PRACH transmitted by the UE follows the second and the first indicated UL/joint TCI state. Alternatively, in a case where the terminal device transmits the random access message, the terminal device transmits the random access message to a plurality of TRPs. For example, The UE transmits the PRACH based on the first indicated UL/joint TCI state for the second TRP, and transmits the PRACH based on the second indicated UL/joint TCI state for the first TRP.

It should be noted that, in the solution, the PDCCH indication information indicates the UE to transmit subsequent random access messages based on the first and/or the second UL/joint TCI state IDs that have been indicated and are applicable via a DCI format 1_1/1_2 or a MAC CE.

Alternatively, the indication information for the first TCI state may include the identifier of the first TCI state, which is used to indicate the terminal device to use the first TCI state corresponding to the identifier from the indicated TCI states for transmitting subsequent random access messages.

2. A PRACH mask associated with the first TCI state.

In the embodiments of the present disclosure, the PRACH mask may indicate a RACH occasion associated with the first TCI state. Correspondingly, the PRACH mask may also indicate the UE to transmit the random access signal on the corresponding RACH occasion by using the first TCI state associated with the PRACH mask.

For example, the PDCCH indication information includes one or more PRACH masks, wherein each PRACH mask corresponds to a RACH occasion associated with the UL/joint TCI state that has been indicated to the terminal device. For example, in an MTRP scenario (e.g., the S-DCI MTRP scenario), the terminal device establishes connections to two TRPs (the first TRP and the second TRP). In this case, the PDCCH indication information includes one or two PRACH masks, wherein each PRACH mask corresponds to a RACH occasion for the first or the second indicated UL/joint TCI state.

3. A random access (or PRACH) preamble index associated with the first TCI state.

In the embodiments of the present disclosure, the PRACH preamble index may indicate a PRACH preamble index associated with the first TCI state. Correspondingly, the PRACH preamble index may also indicate the UE to transmit the random access message based on the first TCI state associated with the PRACH preamble index.

For example, the PDCCH indication information includes one or more random access preamble indexes, wherein each random access preamble index corresponds to a UL/joint TCI state already indicated to the terminal device. For example, in an MTRP scenario (e.g., the S-DCI MTRP scenario), the terminal device establishes connections to two TRPs (the first TRP and the second TRP), the PDCCH indication information includes one or two preamble indexes, wherein each preamble index corresponds to a sequence index known to both the network and the UE.

The technical solutions illustrated in some embodiments of the present disclosure proposes an enhanced design for the PDCCH order, which differs from the traditional solution that the PDCCH order indicates an SSB index (which requires up to six bits). This design leverages one or more TCI states (e.g., the first and/or the second UL/joint TCI states) that have been indicated by the network. This enables the PUCCH order to convey more information. Specifically, the UL/joint TCI state may include a TAG index. Therefore, upon receiving the PDCCH order, the UE immediately knows from which TAG to acquire the TA value. This design reduces the PDCCH order payload, requiring only two bits to express the necessary information.

In S1002, the terminal device transmits the random access message on the PRACH based on the first TCI state already indicated to the terminal device. Correspondingly, the network device receives the random access message that is transmitted by the terminal device on the PRACH based on the first TCI state already indicated to the terminal device.

In some embodiments, transmitting the random access message on the PRACH based on the first TCI state already indicated to the terminal device includes: transmitting the random access message on the PRACH based on a spatial filter corresponding to the first TCI state.

In the embodiments, the terminal device may use the first TCI state to resolve the issue of transmission direction for the random access message, thereby improving the accuracy of the PRACH transmission direction.

In some embodiments, the first TCI state is a joint state used by a control resource set (CORESET) containing the PDCCH indication information.

In the embodiments, besides explicitly indicating the first TCI state via the PDCCH indication information, the terminal device may also determine a default TCI state as the first TCI state based on the PDCCH indication information. For example, the terminal device may indirectly determine the first TCI state based on the CORESET containing the PDCCH indication information. For example, upon receiving the PDCCH indication information, the terminal device may consider the joint TCI state used by the CORESET containing the PDCCH indication information as the first TCI state. This extends the methods for determining the first TCI state via the PDCCH indication information.

In some embodiments, in a case where the PDCCH indication information received by the terminal device does not indicate a TCI state, the first TCI state is the joint state used by CORESET containing the PDCCH indication information.

In the embodiments of the present disclosure, in a case where the network device does not explicitly indicate the first TCI state in the PDCCH indication information, or in other words, does not explicitly indicate the terminal device to follow one or more indicated TCI states, then the terminal device may determine the joint TCI state used by the CORESET containing the PDCCH indication information. The joint TCI state serves as the default TCI state for transmitting the random access message for TA value acquisition/update, thereby extending the methods for the terminal device to determine the first TCI state.

In some embodiments, transmitting the random access message on the PRACH based on the first TCI state already indicated to the terminal device includes: transmitting the random access message on the PRACH based on the first TCI state already indicated to the terminal device in a case where a TA timer expires in the terminal device.

For example, in a case where the TA timer corresponding to the first TCI state expires in the terminal device, the terminal device may transmit the random access message on the PRACH based on the first TCI state. For example, in a case where the TA timer corresponding to the TAG ID of the first TCI state expires, the terminal device may transmit the random access message on the PRACH based on the first TCI state.

In the technical solutions, the process for TA value acquisition/update may be triggered by the PDCCH order from the network, and may be triggered by the TA timer at the UE, thereby extending the trigger scenarios for TA value acquisition/update, the UE may transmit the PRACH via a contention-based preamble.

For example, in a case where the network indicates the first and/or the second UL/joint TCI states, and for TRPs that require TA acquisition and corresponds to the first and/or the second UL/joint TCI states. The spatial filter for the PRACH transmitted by the UE may refer to the reference signals in the TCI states. This is feasible because the UL/joint TCI state indicated to the UE may include TAG information, such as a TAG ID or TAG ID Pointer. Each TAG is configured with a TA timer. Thus, in a case where one TA timer expires, the UE knows which TAG requires TA acquisition, and which indicated UL/joint TCI state corresponds to the TAG.

In some embodiments, transmitting the random access message on the PRACH based on the first TCI state already indicated to the terminal device includes: in an S-DCI MTRP operation scenario, transmitting the random access message on the PRACH based on the first TCI state.

The technical solutions illustrated in the embodiments of the present disclosure may be applied to the S-DCI MTRP scenario, thereby extending the application scenarios for TA value acquisition/update.

In S1003, the network device transmits the TA information to the terminal device based on the random access message. Correspondingly, the terminal device receives the TA information that is transmitted by the network device based on the random access message.

In some embodiments, the TA information is carried by a random access response (RAR) or an absolute timing advance medium access control layer control element (Absolute TA MAC CE).

For example, in an MTRP scenario where the terminal device establishes connections to two TRPs, in a case where the network device carries the timing advance information by transmitting the RAR, then the RAR may include one or two sets of TAG IDs and TACs (which includes the TA values). In a case where the network device carries the timing advance information by transmitting the Absolute TA MAC CE, the Absolute TA MAC CE may include one or two sets of TAG IDs and TACs.

In S1004, the terminal device transmits the uplink channel and/or the uplink signal based on the TA information. Correspondingly, the network device receives the uplink channel and/or the uplink signal that is transmitted by the terminal device based on the TA information.

In some embodiments, in a case where the uplink channel is a PUSCH, TA information for the PUSCH transmitted by the terminal device is associated with an SRS resource set indicated by the DCI scheduling the PUSCH.

In the embodiments, the TA information for the PUSCH transmitted by the terminal device may be determined based on the SRS resource set indicated by the DCI scheduling the PUSCH. This provides a method for determining the TA value for the PUSCH. In this way, the TA value for the PUSCH is associated with the SRS resource set without a dedicated indication of the TA value for the PUSCH, thereby improving the communication efficiency of the wireless system.

The embodiments are applicable to MTRP (e.g., S-DCI MTRP) scenarios. Specifically, in a case where the plurality of TRPs are scheduled by single DCI, the terminal device may determine the TA value for PUSCH transmission based on the SRS resource set indicated by the DCI scheduling the PUSCH. In a case where a plurality of TCI states (potentially corresponding to a plurality of TA values) have been indicated to the terminal device, it is possible to clearly specify which TA value to use for the PUSCH transmission, ensuring the communication efficiency of the wireless system.

In some embodiments, the TA information for the PUSCH transmitted by the terminal device is TA information corresponding to a TAG in a second TCI state associated with the SRS resource set indicated by the DCI, wherein the second TCI state is one of the UL/joint TCI states already indicated to the terminal device, the UL/joint TCI states corresponding to a plurality of TRPs respectively.

In the embodiments, in the terminal device, the SRS resource set is associated with the UL/joint TCI states that have indicated to the terminal device and correspond to a plurality of TRPs respectively. For example, each resource set in a plurality of SRS resource sets may be associated with one of the UL/joint TCI states that have indicated to the terminal device and correspond to a plurality of TRPs respectively. Subsequently, during scheduling of the PUSCH by the network device via the DCI, the terminal device may determine the UL/joint TCI state associated with the SRS resource set based on the SRS resource indicated by the DCI. Then, the terminal device acquires the corresponding TA value based on the TAG ID in the UL/joint TCI state, and performs the PUSCH transmission in advance using the TA value. In an MTRP scenario, this scheme associates the PUSCH with the TA value based on the correspondence between the SRS resource and the UL/joint TCI state. It is possible to clearly specify which TA value to use for the PUSCH transmission without a dedicated indication of the TA value for the PUSCH, thereby improving the communication efficiency of the wireless system.

In some embodiments, the TA information for the PUSCH transmitted by the terminal device is TA information corresponding to a TAG associated with the SRS resource set indicated by the DCI.

In the embodiments, in the terminal device, the SRS resource set may also be associated with the TAG already configured for the terminal device by the network device. For example, each resource set in a plurality of SRS resource sets may be associated with the TAG already configured for the terminal device. In other words, the network device may pre-configure the TAG associated with each SRS resource set for the terminal device (i.e., the SRS resource set may be associated with the TAG ID). Subsequently, during scheduling of the PUSCH by the network device via the DCI, the terminal device may determine the TAG ID associated with the SRS resource set based on the SRS resource indicated by the DCI. Then, the terminal device acquires the corresponding TA value based on the TAG ID, and performs the PUSCH transmission in advance using the TA value. This scheme associates the PUSCH with the TA value based on the correspondence between the SRS resource and the TAG ID. It is possible to clearly specify which TA value to use for the PUSCH transmission without a dedicated indication of the TA value for the PUSCH, thereby improving the communication efficiency of the wireless system.

In some embodiments, the TA information for the PUSCH transmitted by the terminal device is TA information configured by the network device for the SRS resource set indicated by the DCI.

In the embodiments of the present disclosure, in the terminal device, the SRS resource set may also be associated with the TA value already configured for the terminal device by the network device. For example, each resource set in the plurality of SRS resource sets may be associated with a TA value. In other words, the network device may pre-configure the TA value associated with each SRS resource set for the terminal device. Subsequently, during scheduling of the PUSCH by the network device via the DCI, the terminal device may determine the TA value associated with the SRS resource set based on the SRS resource indicated by the DCI, and perform the PUSCH transmission in advance using the TA value. This scheme associates the PUSCH with the TA value based on the correspondence between the SRS resource and the TA. It is possible to clearly specify which TA value to use for the PUSCH transmission without a dedicated indication of the TA value for the PUSCH, thereby improving the communication efficiency of the wireless system.

In some embodiments, in a case where the uplink channel is a PUCCH, TA information for the PUCCH transmitted by the terminal device is associated with a PUCCH resource/resource group.

In the embodiments, the TA information for the PUCCH transmitted by the terminal device may be determined based on the PUCCH resource/resource group. This provides a method for determining the TA value for the PUCCH. In this way, the TA value for the PUCCH is associated with the PUCCH resource/resource group without a dedicated indication of the TA value for the PUCCH, thereby improving the communication efficiency of the wireless system.

In some embodiments, the TA information for the PUCCH transmitted by the terminal device is TA information corresponding to a TAG in a third TCI state associated with the PUCCH resource/resource group, wherein the third TCI state is one of the UL/joint TCI states already indicated to the terminal device, the UL/-joint TCI states corresponding to a plurality of TRPs respectively.

In the embodiments, in the terminal device, the PUCCH resource/resource group is associated with the UL/joint TCI states that are already indicated to the terminal device and correspond to a plurality of TRPs respectively. For example, the PUCCH resource/resource group may be associated with one of the UL/joint TCI states that are already indicated to the terminal device and correspond to a plurality of TRPs respectively. Subsequently, during transmission of the PUCCH by the terminal device, the terminal device may determine the UL/joint TCI state associated with the PUCCH resource/resource group. Then, the terminal device acquires the corresponding TA value based on the TAG ID in the UL/joint TCI state, and performs the PUCCH transmission in advance using the TA value. In an MTRP scenario. This scheme associates the PUCCH with the TA value based on the correspondence between the PUCCH resource/resource group and the UL/joint TCI state. It is possible to clearly specify which TA value to use for the PUCCH transmission without a dedicated indication of the TA value for the PUCCH, thereby improving the communication efficiency of the wireless system.

In some embodiments, the TA information for the PUCCH transmitted by the terminal device is TA information corresponding to a TAG configured by the network device for the PUCCH resource/group.

In the embodiments, in the terminal device, the PUCCH resource/resource group may also be associated with the TAG already configured for the terminal device by the network device. For example, the PUCCH resource/resource group may be associated with the TAG already configured for the terminal device. In other words, the network device may pre-configure the TAG associated with the PUCCH resource/resource group for the terminal device (i.e., the PUCCH resource/resource group may be associated with the TAG ID). Subsequently, during transmission of the PUCCH by the terminal device, the terminal device may determine the TAG ID associated with the PUCCH resource/resource group. Then, the terminal device acquires the corresponding TA value based on the TAG ID, and performs the PUCCH transmission in advance using the TA value. In an MTRP scenario. This scheme associates the PUCCH with the TA value based on the correspondence between the PUCCH resource/resource group and the TAG ID. It is possible to clearly specify which TA value to use for the PUCCH transmission without a dedicated indication of the TA value for the PUCCH, thereby improving the communication efficiency of the wireless system.

In some embodiments, the TA information for the PUCCH transmitted by the terminal device is TA information configured by the network device for the PUCCH resource/group.

In the embodiments of the present disclosure, in the terminal device, the PUCCH resource/resource group may also be associated with the TA value already configured for the terminal device by the network device. For example, the PUCCH resource/resource group may be associated with a TA value. In other words, the network device may pre-configure the TA value associated with the PUCCH resource/resource group for the terminal device. Subsequently, during transmission of the PUCCH by the terminal device, the terminal device may determine the TA value associated with the PUCCH resource/resource group, and perform the PUCCH transmission in advance using the TA value. In an MTRP scenario, this scheme associates the PUCCH with the TA value based on the correspondence between the PUCCH resource/resource group and the TA. It is possible to clearly specify which TA value to use for the PUCCH transmission without a dedicated indication of the TA value for the PUCCH, thereby improving the communication efficiency of the wireless system.

In some embodiments, in a case where the uplink channel is an SRS, TA information for the SRS transmitted by the terminal device is associated with an SRS resource set containing the SRS.

In the embodiments, the TA information for the SRS transmitted by the terminal device may be determined based on the SRS resource set containing the SRS. This provides a method for determining the TA value for the SRS. In this way, the TA value for the SRS is associated with the SRS resource set without a dedicated indication of the TA value for the SRS, thereby improving the communication efficiency of the wireless system.

In some embodiments, the TA information for the SRS transmitted by the terminal device is TA information corresponding to a TAG in a fourth TCI state associated with the SRS resource set containing the SRS, wherein the fourth TCI state is one of the UL/joint TCI states already indicated to the terminal device, the UL/-joint TCI states corresponding to a plurality of TRPs respectively.

In the embodiments, in the terminal device, the SRS resource set is associated with the UL/joint TCI states that are already indicated to the terminal device and correspond to a plurality of TRPs respectively. For example, each resource set in the plurality of SRS resource sets may be associated with one of the UL/joint TCI states that are already indicated to the terminal device and correspond to a plurality of TRPs respectively. Subsequently, during transmission of the SRS by the terminal device, the terminal device may determine the UL/joint TCI state associated with the SRS resource set based on the SRS resource set containing the SRS. Then, the terminal device acquires the corresponding TA value based on the TAG ID in the UL/joint TCI state, and performs the SRS transmission in advance using the TA value. In an MTRP scenario, this scheme associates the SRS with the TA value based on the correspondence between the SRS resource set and the UL/joint TCI state. It is possible to clearly specify which TA value to use for the SRS transmission without a dedicated indication of the TA value for the SRS, thereby improving the communication efficiency of the wireless system.

In some embodiments, the TA information for the SRS transmitted by the terminal device is TA information corresponding to a TAG configured by the network device for the SRS resource set containing the SRS.

In the embodiments, in the terminal device, the SRS resource set may also be associated with the TAG already configured for the terminal device by the network device. For example, each resource set in the plurality of SRS resource sets may be associated with the TAG already configured for the terminal device. In other words, the network device may pre-configure the TAG associated with each SRS resource set for the terminal device (i.e., the SRS resource set may be associated with the TAG ID). Subsequently, during transmission of the SRS by the terminal device, the terminal device may determine the TAG ID associated with the SRS resource set based on the SRS resource set containing the SRS. Then, the terminal device acquires the corresponding TA value based on the TAG ID, and performs the SRS transmission in advance using the TA value. In an MTRP scenario, this scheme associates the SRS with the TA value based on the correspondence between the SRS resource set and the TAG ID. It is possible to clearly specify which TA value to use for the SRS transmission without a dedicated indication of the TA value for the SRS, thereby improving the communication efficiency of the wireless system.

In some embodiments, the TA information for the SRS transmitted by the terminal device is TA information configured by the network device for the SRS resource set containing the SRS.

In the embodiments of the present disclosure, in the terminal device, the SRS resource set may also be associated with the TA value already configured for the terminal device by the network device. For example, each resource set in the plurality of SRS resource sets may be associated with a TA value. In other words, the network device may pre-configure the TA value associated with each SRS resource set for the terminal device. Subsequently, during transmission of the SRS by the terminal device, the terminal device may determine the TA value associated with the SRS resource set based on the SRS resource set containing the SRS, and perform the SRS transmission in advance using the TA value. In an MTRP scenario, this scheme associates the SRS with the TA value based on the correspondence between the SRS resource set and the TA. It is possible to clearly specify which TA value to use for the SRS transmission without a dedicated indication of the TA value for the SRS, thereby improving the communication efficiency of the wireless system.

In some embodiments, the different UL/joint TCI states already indicated to the terminal device correspond to different TA information.

In the embodiments of the present disclosure, for MTRP scenarios, the terminal device may be indicated with a plurality of UL/joint TCI states corresponding to different TRPs, and the plurality of UL/joint TCI states may correspond to different timing advance information. This enables accurate control of uplink transmission TA in the MTRP (e.g., an S-DCI MTRP) scenarios, thereby improving the communication efficiency of the wireless system.

The technical solutions illustrated in FIG. 9 or FIG. 10 of the present disclosure are applicable to the TA acquisition and TA association for S-DCI MTRP of intra-cell and inter-cell. The solutions may include at least the following:

(1) The PDCCH order indicated by the network includes indication information for the first and/or the second indicated UL/joint TCI states. The indication information may adopt various codepoint indication methods. For example, the PRACH transmitted by the UE follows the first and/or the second indicated UL/joint TCI state. Additionally, in a case where the codepoint is "10" or "11", the PRACH transmitted by the UE follows the first and the second or the second and the first indicated UL/joint TCI state, respectively. The PRACH mask indicated in the PDCCH order may be associated with the reference signal in the first or the second UL/joint TCI state. The UE may also trigger the PRACH to use the spatial filter of the first and/or the second TCI states indicated via the TA timer.

(2) In an S-DCI MTRP scenario, the PUSCH/-PUCCH/SRS are associated with the TAG via the indicated UL/joint TCI state. In a case where the UL/joint TCI state lacks TAG configuration information, a default or RRC-configured solution is used to acquire the association between the PUSCH/-PUCCH/SRS and the TAG.

Taking the TA acquisition and association in an intra-cell S-DCI MTRP operation as an example, the technical solution illustrated in the FIG. 9 or FIG. 10 of the present disclosure may be implemented in the following manner:
In an intra-cell S-DCI MTRP operation, the network may trigger the UE to transmit a PRACH to a target TRP to acquire the TA value of the TRP, and indicate the TA value to the UE via downlink signaling. FIG. 11 is a step diagram of a TA acquisition process according to some embodiments of the present disclosure. As illustrated in FIG. 4, for example, the UE establishes a wireless connection with two TRPs, wherein each TRP is indicated with one of the first indicated UL/joint TCI state and the second indicated UL/joint TCI state, the TA acquisition process may be as follows:
In S1, the network transmits the PDCCH order (enhanced) to the UE.

The enhanced PDCCH order at least includes:

the first and/or the second indicated UL/joint TCI state;
one or two PRACH masks;
one or two preamble indexes.

In S2, the UE transmitting the PRACH based on the indication information of the PDCCH order.

In a case where the PDCCH order indicates the first or the second UL TCI state, the PRACH transmission is a traditional single-TRP oriented.

In a case where the PDCCH order indicates the first and the second UL TCI state, the PRACH transmission may be MTRP-oriented, such as PRACH single frequency network (SFN), PRACH frequency division multiplexing (FDM) repetition or PRACH TDM repetition.

Besides, in a case where the PDCCH order does not directly indicate the UE to follow the first and/or the second UL/joint TCI states, a default solution is needed to determine the PRACH transmission direction. The technical solution in the present disclosure is that the PRACH follows joint TCI states used by the CORESET containing the PDCCH order for uplink spatial filter selection. The joint TCI states may be the first and/or second joint TCI states indicated by the network.

In S3, the network estimates the TA value of the UE via the PRACH and indicates the TA value to the UE via the RAR or the absolute (or explicit) TA MAC CE.

In addition to the TA acquisition via the RACH procedure triggered by the network transmitting the PDCCH order as described above, the UE may also autonomously trigger a contention-based RACH procedure to acquire TA. FIG. 12 is a flowchart of the UE-triggered contention-based RACH procedure for TA acquisition according to some embodiments of the present disclosure. As illustrated in FIG. 12, the scheme does not require a PDCCH order from the network to trigger, instead, the technical solution utilizes the TA timer at the UE to trigger the TA update process. The UE uses a contention-based preamble for PRACH transmission.

The above describes the basic TA acquisition process. Hereinafter, how the UE associates different TAGs (using the corresponding TA values for different TRPs) in a case where the UE transmits uplink channels (e.g., PUCCH/PUSCH) and signals (e.g., SRSs) is introduced. In short, the indicated UL/joint TCI states are the key for associating uplink channel signals with TAGs.

In an intra-cell S-DCI MTRP operation, DCI format 1_1 or 1_2 may indicate the first and/or the second UL/joint TCI states. The indicated UL/joint TCI states (selectively) include TAG information, such as a TAG ID, a TAG ID pointer, or the like. In a case where the indicated UL/joint TCI states (selectively) include the TAG ID, the TAG information is 2 bits, because a serving cell may be associated with up to two of four TAGs. In a case where the indicated UL/joint TCI states (selectively) include the TAG ID pointer, then 1 bit of TAG information is sufficient, because a serving cell may be associated with up to 2 TAGs.

The indicated UL/joint TCI states have an absolute association with uplink channels (e.g., PUCCH or PUSCH) and uplink signals (e.g., SRSs).

Based on the above two points, the indicated UL/joint TCI states may associate the TAG with uplink channels and signals. In a case where the network indicates the UL/joint TCI state, for the uplink channels and/or the uplink signals to which the UL/joint TCI state applies, the UE should use the TA value for the TAG associated with that UL/joint TCI state for uplink transmission. The following sections will describe this separately for different channels and different signals.

## PUSCH

A PUSCH may use a spatial filter (i.e., transmit beam direction) consistent with the SRS (CB or NCB). In the technical solution according to the present disclosure, the SRS resource set corresponds one-to-one with the indicated UL/joint TCI state. Specifically, for example:
In a case where the SRS resource set indication field in the DCI is "00," i.e., using of the first SRS resource set, the UE applies the first indicated UL/joint TCI state to all PUSCH antenna ports. In a case where the SRS resource set indication field in the DCI is "01," i.e., using of the second SRS resource set, the UE applies the second indicated UL/joint TCI state to all PUSCH antenna ports. In a case where the SRS resource set indication field in the DCI is "10" or "11," i.e., using of the first and second SRS resource sets, the UE applies the first indicated UL/joint TCI state to the PUSCH antenna ports associated with the first SRS resource set, and applies the second indicated UL/joint TCI state to the PUSCH antenna ports associated with the second SRS resource set. This establishes an association from PUSCH antenna ports to SRS resource sets to UL/joint TCI states. Furthermore, the UL/joint TCI state may include TAG information. Based on this, in a case where the UE transmits the PUSCH, the UE may be associated with the corresponding TAG and use the TA value for the TAG to transmit the PUSCH.

If the association chain is broken, for example, the network selectively does not configure TAG information in the UL/joint TCI state, then the UE may not know which TA value for TAG to use in a case where the UE transmits the PUSCH. In this case, a default association method is needed. For example, the first SRS resource set is associated with the TAG with the lower TAG ID, and the second SRS resource set is associated with another TAG with a higher TAG ID. It should be noted that the configurable range of TAG IDs is from 0 to 3, for a total of four TAGs. Another method is to configure a corresponding TAG for the SRS resource set via RRC signaling, i.e., configure TAG ID in the RRC information element (IE) of the SRS resource set.

## PUCCH

A PUCCH may be associated with the indicated UL/joint TCI state based on the manner of PUCCH resources or resource sets. This association is signaled via RRC configuration, meaning that a PUCCH resource or resource group should use the first and/or the second indicated UL/joint TCI state. Therefore, similarly, the UL/joint TCI state becomes a key for associating the PUCCH with the TAG, i.e., from the PUCCH to the indicated UL/joint TCI state associated via RRC configuration, and then to TAG. Specifically, the TA value used by the UE to transmit the PUCCH is a TA value associated with the first and/or the second UL/joint state applicable to the PUCCH resource/resource group.

There is also the possibility of a broken association, for example, the network selectively does not configure TAG information in the UL/joint TCI state. The method that may be used is also RRC configuration. Specifically, the network configures the TAG ID for the PUCCH resource/resource group via RRC.

## SRS

In R18, under S-DCI MTRP operation, an SRS may be configured to follow the first or second UL/joint TCI state indicated by the network based on its time domain characteristics and/or functional combination. Here, the SRS may be transmitted to a single TRP, and thus a single SRS resource may not be able to use both the first and second (i.e., two) UL/joint TCI states. These SRS resources include:

P/SP/AP SRS resource sets are used for "codebook transmission," "non-codebook transmission," or "antenna switching;"
AP SRS resource sets are used for "beam management."

The network may use RRC signaling to configure the SRS resource set to follow the indicated first or second UL/joint TCI state. In a case where the indicated UL/joint TCI state includes TAG information, the SRS resources in the SRS resource set may be associated with a TAG via the UL/joint TCI state. Therefore, in a case where the UE transmits SRS resources in the SRS resource set, the UE uses the TA value in the TAG associated with the first or second indicated UL/joint TCI state configured by RRC.

For the SRS resource set, the following special cases need to be handled:

(1) In a case where the network configures the SRS resource set not to follow the indicated first or second UL/joint TCI state;
(2) SP/AP SRS resource sets are used for "beam management".

For (1), the network may configure a single (or dedicated) UL/joint TCI state for the SRS resource set via RRC signaling. The UL/joint TCI state may be associated with a TAG.

For (2), the network may not configure UL/joint TCI states for the SRS resource set via RRC signaling. In this case, the network may directly configure a TAG ID for the SRS resource set via RRC signaling, or default to using the TA value for the TAG with the lower TAG ID.

Furthermore, the technical solution illustrated in some embodiment of the present disclosure may also introduce additional restriction mechanisms at the protocol layer. Considering that different TRPs in multi-TRP should correspond to different uplink TAs, i.e., different TAGs. Specifically, the indicated first uplink/joint TCI state and second uplink/joint TCI state are associated with different TAGs, meaning different TAG IDs or different TAG ID pointers.

For the future evolution of NR, uplink transmission in the plurality of TRPs may extend to four or more TRPs. Using the technical solution according to the present disclosure, it is possible to extend from 2 TRPs to 4 or more TRPs. For example, the association of the PUSCH/PUCCH/SRS with the first and/or the second UL/joint TCI states may be further extended to associate with 2 different TAGs, or from associating the PUSCH/-PUCCH/SRS with the first, second, third, and/or fourth UL/joint TCI states to be associated with 4 different TAGs.

Regarding the TA acquisition and association in the inter-cell S-DCI MTRP operation, in a case where the terminal device supports inter-cell S-DCI MTRP, at least one TRP in the plurality of TRPs uses PCI of serving cell, and at least one PCI of TRP is different from the PCI of serving cell. For the inter-cell S-DCI MTRP scenario, similar to the TA acquisition and association methods in the intra-cell S-DCI MTRP operation, the technical solution illustrated in FIG. 9 or FIG. 10 of the present disclosure may be used to handle it. In other words, the core of the association relationship between the uplink channel/signals and TAG remains as UL/joint TCI state. Specifically, the RRC configuration of the UL/joint TCI state may include an "additionalPCI-r17" parameter, indicating that the UL or joint TCI state may originate from another cell (with a different PCI from the serving cell). The network may schedule the UE to send the PUCCH/-PUSCH/SRS to other cells and utilize the uplink/joint TCI state associated with those cells.

That is, this case, for both TA acquisition and TA association indication, the present disclosure reuses the design of intra-cell S-DCI MTRP and extends it to inter-cell S-DCI MTRP only via the "additionalPCI-r17" parameter in the UL/joint TCI state.

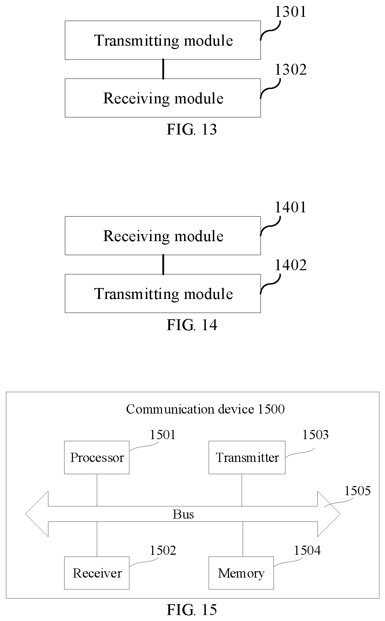

FIG. 13 is a block diagram of an apparatus for wireless communication according to some embodiments of the present disclosure. The wireless communication apparatus implements the functions performed by the terminal device in the methods illustrated in FIG. 9 and FIG. 10. As illustrated in FIG. 13, the apparatus may include a transmitting module 1301 and a receiving module 1302.

The transmitting module 1301 is configured to transmit a random access message on a PRACH based on a first TCI state already indicated to the terminal device.

The receiving module 1302 is configured to receive TA information that is transmitted by a network device based on the random access message.

The transmitting module 1301 is further configured to transmit an uplink channel and/or an uplink signal based on the TA information.

In some embodiments, the receiving module 1302 is further configured to receive PDCCH indication information from the network device, wherein the PDCCH indication information is used to indicate the first TCI state based on which the terminal device transmits the random access message.

In some embodiments, the first TCI state is one or more of UL/joint TCI states already indicated to the terminal device, wherein the UL/joint TCI states correspond to a plurality of TRPs respectively.

In some embodiments, the PDCCH indication information includes one or more of: indication information for the first TCI state; a PRACH mask associated with the first TCI state; and a random access preamble index associated with the first TCI state.

In some embodiments, the first TCI state is a joint state used by a CORESET containing PDCCH indication information.

In some embodiments, in a case where PDCCH indication information received by the terminal device does not indicate a TCI state, the first TCI state is the joint state used by the CORESET containing the PDCCH indication information.

In some embodiments, the TA information is carried by an RAR or an Absolute TA MAC CE.

In some embodiments, the transmitting module 1301 is further configured to transmit the random access message on the PRACH based on the first TCI state already indicated to the terminal device in a case where a TA timer expires in the terminal device.

In some embodiments, the transmitting module 1301 is further configured to transmit the random access message on the PRACH based on a spatial filter corresponding to the first TCI state.

In some embodiments, in a case where the uplink channel is a PUSCH, TA information for the PUSCH transmitted by the terminal device is associated with an SRS resource set indicated by DCI scheduling the PUSCH.

In some embodiments, the TA information for the PUSCH transmitted by the terminal device is TA information corresponding to a TAG in a second TCI state associated with the SRS resource set indicated by the DCI, wherein the second TCI state is one of UL/joint TCI states already indicated to the terminal device, the UL/-joint TCI states corresponding to a plurality of TRPs respectively; or the TA information for the PUSCH transmitted by the terminal device is TA information corresponding to a TAG associated with the SRS resource set indicated by the DCI; or the TA information for the PUSCH transmitted by the terminal device is TA information configured by the network device for the SRS resource set indicated by the DCI.

In some embodiments, in a case where the uplink channel is a PUCCH, TA information for the PUCCH transmitted by the terminal device is associated with a PUCCH resource/resource group.

In some embodiments, the TA information for the PUCCH transmitted by the terminal device is TA information corresponding to a TAG in a third TCI state associated with the PUCCH resource/resource group, wherein the third TCI state is one of UL/joint TCI states already indicated to the terminal device, the UL/joint TCI states corresponding to a plurality of TRPs respectively; or the TA information for the PUCCH transmitted by the terminal device is TA information corresponding to a TAG configured by the network device for the PUCCH resource/resource group; or the TA information for the PUCCH transmitted by the terminal device is TA information configured by the network device for the PUCCH resource/resource group.

In some embodiments, in a case where the uplink channel is an SRS, TA information for the SRS transmitted by the terminal device is associated with an SRS resource/resource set containing the SRS.

In some embodiments, TA information for the SRS transmitted by the terminal device is TA information corresponding to a TAG in a fourth TCI state associated with the SRS resource/resource set containing the SRS, wherein the fourth TCI state is one of UL/joint TCI states already indicated to the terminal device, the UL/joint TCI states corresponding to a plurality of TRPs respectively; or the TA information for the SRS transmitted by the terminal device is TA information corresponding to a TAG configured by the network device for the SRS resource/resource set containing the SRS; or the TA information for the SRS transmitted by the terminal device is TA information configured by the network device for the SRS resource/resource set containing the SRS.

In some embodiments, different UL /joint TCI states already indicated to the terminal device correspond to different TA information.

In some embodiments, the transmitting module 1301 is further configured to transmit the random access message on the PRACH based on the first TCI state in an S-DCI MTRP scenario.

FIG. 14 is a block diagram of an apparatus for wireless communication according to some embodiments of the present disclosure. The wireless communication apparatus implements the functions performed by the network device in the methods illustrated in FIG. 9 and FIG. 10. As illustrated in FIG. 14, the apparatus may include a receiving module 1401 and a transmitting module 1402.

The receiving module 1401 is configured to receive a random access message that is transmitted by a terminal device on a PRACH based on a first TCI state already indicated to the terminal device.

The transmitting module 1402 is configured to transmit TA information based on the random access message.

The receiving module 1401 is further configured to receive an uplink channel and/or an uplink signal that is transmitted by the terminal device based on the TA information.

In some embodiments, the transmitting module 1402 is further configured to transmit PDCCH indication information to the terminal device, wherein the PDCCH indication information is used to indicate the first TCI state based on which the terminal device transmits the random access message.

In some embodiments, the first TCI state is one or more of UL/joint TCI states already indicated to the terminal device, wherein the UL/joint TCI states correspond to a plurality of TRPs respectively.

In some embodiments, the PDCCH indication information includes one or more of: indication information for the first TCI state; a PRACH mask associated with the first TCI state; and a random access preamble index associated with the first TCI state.

In some embodiments, the first TCI state is a joint state used by a CORESET containing PDCCH indication information.

In some embodiments, in a case where PDCCH indication information transmitted to the terminal device does not indicate a TCI state, the first TCI state is the joint state used by the CORESET containing the PDCCH indication information.

In some embodiments, the TA information is carried by an RAR or an Absolute TA MAC CE.

In some embodiments, the receiving module 1401 is further configured to receive the random access message that is transmitted by the terminal device on the PRACH based on the first TCI state already indicated to the terminal device in a case where a TA timer expires.

In some embodiments, the receiving module 1401 is further configured to receive the random access message that is transmitted by the terminal device on the PRACH based on a spatial filter corresponding to the first TCI state.

In some embodiments, in a case where the uplink channel is a PUSCH, TA information for the PUSCH transmitted by the terminal device is associated with an SRS resource set indicated by DCI scheduling the PUSCH.

In some embodiments, the TA information for the PUSCH transmitted by the terminal device is TA information corresponding to a TAG in a second TCI state associated with the SRS resource set indicated by the DCI, wherein the second TCI state is one of UL/joint TCI states already indicated to the terminal device, the UL/joint TCI states corresponding to a plurality of TRPs respectively; or the TA information for the PUSCH transmitted by the terminal device is TA information corresponding to a TAG associated with the SRS resource set indicated by the DCI; or the TA information for the PUSCH transmitted by the terminal device is TA information configured by the network device for the SRS resource set indicated by the DCI.

In some embodiments, in a case where the uplink channel is a PUCCH, TA information for the PUCCH transmitted by the terminal device is associated with a PUCCH resource/resource group

In some embodiments, the TA information for the PUCCH transmitted by the terminal device is TA information corresponding to a TAG in a third TCI state associated with the PUCCH resource/resource group, wherein the third TCI state is one of UL/joint TCI states already indicated to the terminal device, the UL/joint TCI states corresponding to a plurality of TRPs respectively; or the TA information for the PUCCH transmitted by the terminal device is TA information corresponding to a TAG configured by the network device for the PUCCH resource/resource group; or the TA information for the PUCCH transmitted by the terminal device is TA information configured by the network device for the PUCCH resource/resource group.

In some embodiments, in a case where the uplink channel is an SRS, TA information for the SRS transmitted by the terminal device is associated with an SRS resource/resource set containing the SRS.

In some embodiments, TA information for the SRS transmitted by the terminal device is TA information corresponding to a TAG in a fourth TCI state associated with the SRS resource/resource set containing the SRS, wherein the fourth TCI state is one of UL/joint TCI states already indicated to the terminal device, the UL/joint TCI states corresponding to a plurality of TRPs respectively; or the TA information for the SRS transmitted by the terminal device is TA information corresponding to a TAG configured by the network device for the SRS resource/resource set containing the SRS; or the TA information for the SRS transmitted by the terminal device is TA information configured by the network device for the SRS resource/resource set containing the SRS.

In some embodiments, different UL /joint TCI states already indicated to the terminal device correspond to different TA information.

In some embodiments, the receiving module 1401 is further configured to receive the random access message that is transmitted by the terminal device on the PRACH based on the first TCI state in an S-DCI MTRP scenario.

It should be noted that when implementing the functions of the apparatus according to the above embodiments, the division of the various functional modules is merely exemplary. In practical applications, the above functions may be assigned to different functional modules according to actual needs, i.e., the content structure of the device may be divided into different functional modules to accomplish all or part of the above functions.

With regard to the apparatus in the aforementioned embodiments, the specific mode in which each module performs the operation has been described in detail in the embodiments related to the method, which is not described herein any further.

FIG. 15 is a schematic structural diagram of a communication device 1500 according to some embodiments of the present disclosure. The communication device 1500 includes: a processor 1501, a receiver 1502, a transmitter 1503, a memory 1504, and a bus 1505.

The processor 1501 includes one or more processing cores, and achieves various functional applications and information processing by running software programs and modules

The receiver 1502 and the transmitter 1503 are practiced as a communication assembly. The communication assembly is a communication chip. The communication chip may also be referred to as a transceiver. The memory 1504 is connected to the processor 1501 via the bus 1505. The memory 1504 is configured to store one or more computer programs, and the processor 1501, when loading and executing the one or more computer programs, is caused to perform various processes in the above method embodiments.

In addition, the memory 1504 is practiced by any type of volatile or non-volatile storage device or combinations thereof. The volatile or non-volatile storage device includes but is not limited to a disk or optical disc, an electrically erasable programmable read-only memory (EEPROM), an erasable programmable read-only memory (EPROM), a static random-access memory (SRAM), a read-only memory (ROM), a magnetic memory, a flash memory, or a programmable read-only memory (PROM).

In an exemplary embodiment, in a case where the communication device 1500 is implemented as the terminal device, the receiver 1502 and the processor 1501 execute the one or more computer programs to cause the communication device to implement various steps performed by the terminal device in the method illustrated in FIG. 9 or FIG. 10.

In an exemplary embodiment, in a case where the communication device 1500 is implemented as the network device, the transmitter 1503 and the processor 1501 execute the one or more computer programs to cause the communication device to implement the various steps performed by the network device in the method shown in FIG. 9 or FIG. 10.

In some embodiments of the present disclosure, a computer-readable storage medium is provided. The computer-readable storage medium stores one or more computer programs, wherein the one or more computer programs, when loaded and run by a processor, cause the processor to perform all or part of the steps performed by the terminal device or the network device in the method illustrated in FIG. 9 or FIG. 10.

In some embodiments of the present disclosure, a chip is provided. The chip is configured to run in a communication device, to cause the communication device to perform all or part of the steps performed by the terminal device or the network device in the method illustrated in FIG. 9 or FIG. 10.

In some embodiments of the present disclosure, a computer program product is provided. The computer program product or computer program includes: one or more computer instructions stored in a computer-readable storage medium, wherein the one or more computer instructions, when read from the computer-readable storage medium and executed by a processor of a communication device, cause the communication device to perform all or part of the steps performed by the terminal device or the network device in the method illustrated in FIG. 9 or FIG. 10.

In some embodiments of the present disclosure, a computer program is provided. The computer program, when loaded and run by a processor of a communication device, causes the communication device to perform all or part of the steps performed by the terminal device or the network device in the method illustrated in FIG. 9 or FIG. 10.

Those skilled in the art should be aware that in the above one or more examples, the functions described in the embodiments of the present disclosure may be implemented by hardware, software, firmware, or any combination thereof. When implemented by software, these functions may be stored on a computer-readable medium or transmitted as one or more instructions or codes on a computer-readable medium. A computer-readable medium includes a computer storage medium and a communication medium, wherein the communication medium includes any medium that facilitates the transfer of a computer program from one place to another. The storage medium may be any available medium that may be accessed by a general-purpose or special-purpose computer.

Described above are only embodiments of the present disclosure, which are not intended to limit the present disclosure. Any modifications, equivalent replacements, improvements, and the like, made in the spirit and principles of the present disclosure should be included in the protection scope of the present disclosure.

**Claims**

1. A method for wireless communication, performed by a terminal device, the method comprising:

   transmitting a random access message on a physical random access channel (PRACH) based on a first transmission configuration indicator (TCI) state already indicated to the terminal device;
   receiving timing advance information that is transmitted by a network device based on the random access message; and
   transmitting an uplink channel and/or an uplink signal based on the timing advance information.

2. The method according to claim 1, further comprising:
   receiving physical downlink control channel (PDCCH) indication information from the network device, wherein the PDCCH indication information is used to indicate the first TCI state based on which the terminal device transmits the random access message.

3. The method according to claim 2, wherein the first TCI state is one or more of uplink/joint TCI states already indicated to the terminal device, wherein the uplink/joint TCI states correspond to a plurality of transmission reception points (TRPs) respectively.

4. The method according to claim 3, wherein the PDCCH indication information comprises one or more of:

   indication information for the first TCI state;
   a PRACH mask associated with the first TCI state; and
   a random access preamble index associated with the first TCI state.

5. The method according to claim 1, wherein the first TCI state is a joint state used by a control resource set (CORESET) containing PDCCH indication information.

6. The method according to claim 5, wherein in a case where PDCCH indication information received by the terminal device does not indicate a TCI state, the first TCI state is the joint state used by the CORESET containing the PDCCH indication information.

7. The method according to any one of claims 2 to 6, wherein the timing advance information is carried by a random access response (RAR) or an absolute timing advance medium access control layer control element (Absolute TA MAC CE).

8. The method according to any one of claims 1 to 7, wherein transmitting the random access message on the PRACH based on the first TCI state already indicated to the terminal device comprises:
   transmitting the random access message on the PRACH based on the first TCI state already indicated to the terminal device in a case where a timing advance (TA) timer expires in the terminal device.

9. The method according to any one of claims 1 to 8, wherein transmitting the random access message on the PRACH based on the first TCI state already indicated to the terminal device comprises:
   transmitting the random access message on the PRACH based on a spatial filter corresponding to the first TCI state.

10. The method according to any one of claims 1 to 9, wherein in a case where the uplink channel is a physical uplink shared channel (PUSCH), timing advance information for the PUSCH transmitted by the terminal device is associated with a sounding reference signal (SRS) resource set indicated by downlink control information (DCI) scheduling the PUSCH.

11. The method according to claim 10, wherein

    the timing advance information for the PUSCH transmitted by the terminal device is timing advance information corresponding to a timing advance group (TAG) in a second TCI state associated with the SRS resource set indicated by the DCI, wherein the second TCI state is one of uplink/joint TCI states already indicated to the terminal device, the uplink/joint TCI states corresponding to a plurality of transmission reception points (TRPs) respectively; or
the timing advance information for the PUSCH transmitted by the terminal device is timing advance information corresponding to a TAG associated with the SRS resource set indicated by the DCI; or
the timing advance information for the PUSCH transmitted by the terminal device is timing advance information configured by the network device for the SRS resource set indicated by the DCI.

12. The method according to any one of claims 1 to 9, wherein in a case where the uplink channel is a physical uplink control channel (PUCCH), timing advance information for the PUCCH transmitted by the terminal device is associated with a PUCCH resource/resource group.

13. The method according to claim 12, wherein

the timing advance information for the PUCCH transmitted by the terminal device is timing advance information corresponding to a TAG in a third TCI state associated with the PUCCH resource/resource group, wherein the third TCI state is one of uplink/joint TCI states already indicated to the terminal device, the uplink/joint TCI states corresponding to a plurality of transmission reception points (TRPs) respectively; or
the timing advance information for the PUCCH transmitted by the terminal device is timing advance information corresponding to a TAG configured by the network device for the PUCCH resource/resource group; or
the timing advance information for the PUCCH transmitted by the terminal device is timing advance information configured by the network device for the PUCCH resource/resource group.

14. The method according to any one of claims 1 to 9, wherein in a case where the uplink channel is a sounding reference signal (SRS),
timing advance information for the SRS transmitted by the terminal device is associated with an SRS resource/resource set containing the SRS.

15. The method according to claim 14, wherein

timing advance information for the SRS transmitted by the terminal device is timing advance information corresponding to a TAG in a fourth TCI state associated with the SRS resource/resource set containing the SRS, wherein the fourth TCI state is one of uplink/joint TCI states already indicated to the terminal device, the uplink/joint TCI states corresponding to a plurality of transmission reception points (TRPs) respectively; or
the timing advance information for the SRS transmitted by the terminal device is timing advance information corresponding to a TAG configured by the network device for the SRS resource/resource set containing the SRS; or
the timing advance information for the SRS transmitted by the terminal device is timing advance information configured by the network device for the SRS resource/resource set containing the SRS.

16. The method according to claim 11, 13 or 15, wherein different uplink /joint TCI states already indicated to the terminal device correspond to different timing advance information.

17. The method according to any one of claims 1 to 16, wherein transmitting the random access message on the PRACH based on the first TCI state already indicated to the terminal device comprises:
transmitting the random access message on the PRACH based on the first TCI state in a single-DCI scheduled multi-TRP operation (S-DCI MTRP) scenario.

18. A method for wireless communication, performed by a network device, the method comprising:

receiving a random access message that is transmitted by a terminal device on a physical random access channel (PRACH) based on a first transmission configuration indicator (TCI) state already indicated to the terminal device;
transmitting timing advance information based on the random access message; and
receiving an uplink channel and/or an uplink signal that is transmitted by the terminal device based on the timing advance information.

19. The method according to claim 18, further comprising:
transmitting physical downlink control channel (PDCCH) indication information to the terminal device, wherein the PDCCH indication information is used to indicate the first TCI state based on which the terminal device transmits the random access message.

20. The method according to claim 19, wherein the first TCI state is one or more of uplink/joint TCI states already indicated to the terminal device, wherein the uplink/joint TCI states correspond to a plurality of transmission reception points (TRPs) respectively.

21. The method according to claim 20, wherein the PDCCH indication information comprises one or more of:

indication information for the first TCI state;
a PRACH mask associated with the first TCI state; and
a random access preamble index associated with the first TCI state.

22. The method according to claim 18, wherein the first TCI state is a joint state used by a control resource set (CORESET) containing PDCCH indication information.

23. The method according to claim 22, wherein in a case where PDCCH indication information transmitted to the terminal device does not indicate a TCI state, the first TCI state is the joint state used by the CORESET containing the PDCCH indication information.

24. The method according to any one of claims 19 to 23, wherein the timing advance information is carried by a random access response (RAR) or an absolute timing advance medium access control layer control element (Absolute TA MAC CE).

25. The method according to any one of claims 18 to 24, wherein receiving the random access message that is transmitted by the terminal device on the PRACH based on the first TCI state already indicated to the terminal device comprises:
receiving the random access message that is transmitted by the terminal device on the PRACH based on the first TCI state already indicated to the terminal device in a case where a timing advance (TA) timer expires.

26. The method according to any one of claims 18 to 25, wherein receiving the random access message that is transmitted by the terminal device on the PRACH based on the first TCI state already indicated to the terminal device comprises:
receiving the random access message that is transmitted by the terminal device on the PRACH based on a spatial filter corresponding to the first TCI state.

27. The method according to any one of claims 18 to 26, wherein in a case where the uplink channel is a physical uplink shared channel (PUSCH), timing advance information for the PUSCH transmitted by the terminal device is associated with a sounding reference signal (SRS) resource set indicated by downlink control information (DCI) scheduling the PUSCH.

28. The method according to claim 27, wherein

the timing advance information for the PUSCH transmitted by the terminal device is timing advance information corresponding to a timing advance group (TAG) in a second TCI state associated with the SRS resource set indicated by the DCI, wherein the second TCI state is one of uplink/joint TCI states already indicated to the terminal device, the uplink/joint TCI states corresponding to a plurality of transmission reception points (TRPs) respectively; or
the timing advance information for the PUSCH transmitted by the terminal device is timing advance information corresponding to a TAG associated with the SRS resource set indicated by the DCI; or
the timing advance information for the PUSCH transmitted by the terminal device is timing advance information configured by the network device for the SRS resource set indicated by the DCI.

29. The method according to any one of claims 18 to 26, wherein in a case where the uplink channel is a physical uplink control channel (PUCCH), timing advance information for the PUCCH transmitted by the terminal device is associated with a PUCCH resource/resource group.

30. The method according to claim 29, wherein

the timing advance information for the PUCCH transmitted by the terminal device is timing advance information corresponding to a TAG in a third TCI state associated with the PUCCH resource/resource group, wherein the third TCI state is one of uplink/joint TCI states already indicated to the terminal device, the uplink/joint TCI states corresponding to a plurality of transmission reception points (TRPs) respectively; or
the timing advance information for the PUCCH transmitted by the terminal device is timing advance information corresponding to a TAG configured by the network device for the PUCCH resource/resource group; or
the timing advance information for the PUCCH transmitted by the terminal device is timing advance information configured by the network device for the PUCCH resource/resource group.

31. The method according to any one of claims 18 to 26, wherein in a case where the uplink channel is a sounding reference signal (SRS), timing advance information for the SRS transmitted by the terminal device is associated with an SRS resource/resource set containing the SRS.

32. The method according to claim 31, wherein

timing advance information for the SRS transmitted by the terminal device is timing advance information corresponding to a TAG in a fourth TCI state associated with the SRS resource/resource set containing the SRS, wherein the fourth TCI state is one of uplink/joint TCI states already indicated to the terminal device, the uplink/joint TCI states corresponding to a plurality of transmission reception points (TRPs) respectively; or

the timing advance information for the SRS transmitted by the terminal device is timing advance information corresponding to a TAG configured by the network device for the SRS resource/resource set containing the SRS; or

the timing advance information for the SRS transmitted by the terminal device is timing advance information configured by the network device for the SRS resource/resource set containing the SRS.

33. The method according to claim 28, 30 or 32, wherein different uplink /joint TCI states already indicated to the terminal device correspond to different timing advance information.

34. The method according to any one of claims 18 to 33, wherein receiving the random access message that is transmitted by the terminal device on the PRACH based on the first TCI state already indicated to the terminal device comprises:

receiving the random access message that is transmitted by the terminal device on the PRACH based on the first TCI state in a single-DCI scheduled multi-TRP operation (S-DCI MTRP) scenario.

35. An apparatus for wireless communication, comprising:

a transmitting module, configured to transmit a random access message on a physical random access channel (PRACH) based on a first transmission configuration indicator (TCI) state already indicated to the terminal device;
a receiving module, configured to receive timing advance information that is transmitted by a network device based on the random access message; and
the transmitting module, configured to transmit an uplink channel and/or an uplink signal based on the timing advance information.

36. An apparatus for wireless communication, comprising:

a receiving module, configured to receive a random access message that is transmitted by a terminal device on a physical random access channel (PRACH) based on a first transmission configuration indicator (TCI) state already indicated to the terminal device;
a transmitting module, configured to transmit timing advance information based on the random access message; and
the receiving module, configured to receive an uplink channel and/or an uplink signal that is transmitted by the terminal device based on the timing advance information.

37. A terminal device, comprising: a processor, a memory and a transceiver;
wherein the memory is configured to store one or more computer programs, and the processor is configured to load and run the one or more computer programs to cause the terminal device to perform the method for wireless communication as defined in any one of claims 1 to 17.

38. A network device, comprising: a processor, a memory and a transceiver;
wherein the memory is configured to store one or more computer programs, and the processor is configured to load and run the one or more computer programs to cause the network device to perform the method for wireless communication as defined in any one of claims 18 to 34.

39. A computer-readable storage medium, storing one or more computer programs, wherein the one or more computer programs, when loaded and run by a processor of a communication device, cause the communication device to perform the method for wireless communication as defined in any one of claims 1 to 34.

40. A chip, wherein the chip is configured to run in a communication device, to cause the communication device to perform the method for wireless communication as defined in any one of claims 1 to 34.

41. A computer program product, comprising: one or more computer instructions stored in a computer-readable storage medium, wherein the one or more computer instructions, when read from the computer-readable storage medium and executed by a processor of a communication device, cause the communication device to perform the method for wireless communication as defined in any one of claims 1 to 34.

42. A computer program, wherein the computer program, when loaded and run by a processor of a communication device, causes the communication device to perform the method for wireless communication as defined in any one of claims 1 to 34.

FIG. 1

```
-- ASN1START
-- TAG-TAG-CONFIG-START

TAG-Config ::=              SEQUENCE {
   tag-ToReleaseList            SEQUENCE (SIZE (1..maxNrofTAGs)) OF TAG-Id      OPTIONAL,   -- Need N
   tag-ToAddModList             SEQUENCE (SIZE (1..maxNrofTAGs)) OF TAG         OPTIONAL   -- Need N
}

TAG ::=              SEQUENCE {
   tag-Id                 TAG-Id,
   timeAlignmentTimer              TimeAlignmentTimer,
   ...
}

TAG-Id ::=              INTEGER (0..maxNrofTAGs-1)

TimeAlignmentTimer ::=          ENUMERATED {ms500, ms750, ms1280, ms1920, ms2560, ms5120, ms10240, infinity}

-- TAG-TAG-CONFIG-STOP
-- ASN1STOP
```

FIG. 2

| TAG ID | TAC | OCT 1 |
|--------|-----|-------|

FIG. 3

| R | R | R | R | TAC | OCT 1 |
|---|---|---|---|-----|-------|
| TAC | | | | | OCT 2 |

FIG. 4

| | | |
|---|---|---|
| R | TAC | OCT 1 |
| TAC | UL Grant | OCT 2 |
| UL Grant | | OCT 3 |
| UL Grant | | OCT 4 |
| UL Grant | | OCT 5 |
| Temporary C-RNTI | | OCT 6 |
| Temporary C-RNTI | | OCT 7 |

FIG. 5

| Downlink Frame i |
|---|

| Uplink Frame i |
|---|

$(N_{TA} + N_{TA,offset}) T_c$

FIG. 6

FIG. 7

```
TCI-State ::=              SEQUENCE {
  tci-StateId               TCI-StateId,
  qcl-Type1                 QCL-Info,
  qcl-Type2                 QCL-Info    OPTIONAL,  -- Need R
  ...
}

QCL-Info ::=              SEQUENCE {
  cell                    ServCellIndex    OPTIONAL,  -- Need R
  bwp-Id                    BWP-Id    OPTIONAL, -- Cond CSI-RS-Indicated
  referenceSignal             CHOICE {
    csi-rs                  NZP-CSI-RS-ResourceId,
    ssb                     SSB-Index
  },
  qcl-Type                  ENUMERATED {typeA, typeB, typeC, typeD},
  ...,
  [[
  additionalPCI-r17         AdditionalPCIIndex-r17   OPTIONAL   -- Need R
  ]]
}

DLorJoint-TCIState-r17 ::=     SEQUENCE {
  tci-StateUnifiedId-r17      TCI-StateId,
  qcl-Type1-r17             QCL-Info,
  qcl-Type2-r17             QCL-Info    OPTIONAL,  -- Need R
  ul-powerControl-r17         Uplink-powerControlId-r17 OPTIONAL,  -- Need R
    pathlossReferenceRS-Id-r17    PUSCH-PathlossReferenceRS-Id OPTIONAL   -- Need S
}

UL-TCIState-r17 ::=          SEQUENCE {
  ul-TCIState-Id-r17          UL-TCIState-Id-r17,
  servingCellId-r17           ServCellIndex   OPTIONAL,  -- Need S
  referenceSignal-r17          CHOICE {
    ssb-Index-r17            SSB-Index,
    csi-RS-Index-r17          NZP-CSI-RS-ResourceId,
    srs-r17                 PUCCH-SRS
  },
  additionalPCI-r17         AdditionalPCIIndex-r17 OPTIONAL,  -- Need R
  ul-powerControl-r17         Uplink-powerControlId-r17 OPTIONAL,  -- Need R
    pathlossReferenceRS-Id-r17    PUSCH-PathlossReferenceRS-Id OPTIONAL   -- Need S
}
```

FIG. 8

S901, the terminal device transmits a random access message on a PRACH based on a first TCI state already indicated to the terminal device

S902, the network device transmits TA information to the terminal device based on the random access message

S903, the terminal device transmits an uplink channel and/or an uplink signal based on the TA information

FIG. 9

S1001, the network device transmits PDCCH indication information to the terminal device

S1002, the terminal device transmits the random access message on the PRACH based on the first TCI state already indicated to the terminal device

S1003, the network device transmits the TA information to the terminal device based on the random access message

S1004, the terminal device transmits the uplink channel and/or the uplink signal based on the TA information

FIG. 10

FIG. 11

FIG. 12

1301

Transmitting module

1302

Receiving module

FIG. 13

1401

Receiving module

1402

Transmitting module

FIG. 14

Communication device 1500

1501
Processor

1503
Transmitter

1505

Bus

1502
Receiver

1504
Memory

FIG. 15

## INTERNATIONAL SEARCH REPORT

| International application No. |
|---|
| **PCT/CN2023/114416** |

| A. | CLASSIFICATION OF SUBJECT MATTER |
|---|---|

H04W 74/08(2024.01)i

According to International Patent Classification (IPC) or to both national classification and IPC

| B. | FIELDS SEARCHED |
|---|---|

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, CNTXT, DWPI, ENTXTC, VEN: 标识, 定时提前, 随机接入, 波束, 空间滤波器, 资源集, 前导码, 指示, 指针, 复用, beam, id, identification, pointer, prach, TA, TAG, TCI, Timing 1W advance

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2023125200 A1 (HUAWEI TECHNOLOGIES CO., LTD.) 06 July 2023 (2023-07-06) description, page 9, line 20-page 18, line 10, and page 22, line 10-page 23, line 39 | 1-42 |
| X | WO 2023030341 A1 (HUAWEI TECHNOLOGIES CO., LTD.) 09 March 2023 (2023-03-09) description, page 17, line 30-page 28, line 35 | 1-42 |
| A | US 2021377892 A1 (HUAWEI TECHNOLOGIES CO., LTD.) 02 December 2021 (2021-12-02) entire document | 1-42 |
| A | WO 2023131296 A1 (BEIJING UNISOC COMMUNICATIONS TECHNOLOGY CO., LTD.) 13 July 2023 (2023-07-13) entire document | 1-42 |
| A | ERICSSON. "UE Measurements, Mobility and Suspend/Resume in Deactivated SCG" *3GPP TSG-RAN WG2 #116e Tdoc. R2-2110517*, 12 November 2021 (2021-11-12), entire document | 1-42 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 May 2024** | **15 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/114416**

| Patent document cited in search report | | | Publication date (day/month/year) | Patent family member(s) | | | Publication date (day/month/year) |
|---|---|---|---|---|---|---|---|
| WO | 2023125200 | A1 | 06 July 2023 | CN | 116419353 | A | 11 July 2023 |
| WO | 2023030341 | A1 | 09 March 2023 | CN | 115734335 | A | 03 March 2023 |
| US | 2021377892 | A1 | 02 December 2021 | EP | 3923501 | A1 | 15 December 2021 |
| | | | | WO | 2020164514 | A1 | 20 August 2020 |
| | | | | KR | 20210125573 | A | 18 October 2021 |
| | | | | CN | 111585732 | A | 25 August 2020 |
| | | | | IN | 202127038320 | A | 12 November 2021 |
| WO | 2023131296 | A1 | 13 July 2023 | CN | 116456364 | A | 18 July 2023 |

Form PCT/ISA/210 (patent family annex) (July 2022)